# EUROPÄISCHE PATENTSCHRIFT

(11) **EP 1 496 365 B1**
(45) Veröffentlichungstag und Bekanntmachung des Hinweises auf die Patenterteilung: **04.06.2014**
(21) Anmeldenummer: 04015100.3
(22) Anmeldetag: 28.06.2004
(51) Int. Cl.: G01N 35/00, G01N 35/02, G01N 35/04, B65G 1/04

(54) **Vorrichtung und Verfahren zum Transportieren von Objekten**
Device and method for transporting objects
Dispositif et procédé de transport d'objets

(30) Priorität: 11.07.2003 CH 12172003
(43) Veröffentlichungstag der Anmeldung: 12.01.2005
(73) Patentinhaber: Tecan Trading AG, 8708 Männedorf (CH)
(72) Erfinder: Wiggli, Markus, 8632 Tann (CH); Romer, Hanspeter, 8340 Hinwil (CH); Mürset, Peter, Hayward, CA 94542 (US); Batliner, Gregor, 8835 Feusisberg (CH); Schinzel, Fred, 8708 Männedorf (CH); Oberholzer, Alois, verstorben (CH)
(74) Vertreter: OK pat AG

(56) Entgegenhaltungen:
- EP-A1- 0 629 858
- EP-A1- 1 248 170
- EP-A2- 0 317 325
- WO-A1-01/57538
- WO-A1-92/22880
- US-A- 5 388 946
- US-A- 6 060 022
- TECAN: 'Genesis RSP and genesis NPS Instruments Operating Manual - Doc ID 390783 V2.6' Oktober 2001, Seiten 3/11 - 3/15, XP055084535

## Beschreibung

Die Erfindung betrifft, gemäss dem Oberbegriff der unabhängigen Ansprüche 1 bzw. 12, ein Probenmanipuliersystem und Verfahren zum Transportieren von Objekten in einem Probenmanipuliersystem, bei welchem die Objekte auf zumindest einem, im wesentlichen horizontalen Arbeitsfeld mit einer Längsausdehnung X und einer Querausdehnung Y angeordnet sind.

Für die Verwendung bei der Untersuchung von Genen ("Genomics"), Proteinen ("Proteomics") zum Entdecken von neuen Wirkstoffen ("Drug Discovery") und in der klinischen Diagnose ("Clinical Diagnostics") sind Vorrichtungen und Systeme bekannt, welche beispielsweise einen Liquid-Handling-Roboter und einen Objekt-Transfer-Roboter umfassen. Ein solches System ist z.B. die vom Anmelder unter dem Namen "Genesis Robotic Sample Processor" vertriebene Arbeitsplattform. Es handelt sich dabei um eine Vorrichtung zum Manipulieren von Proben in Behältern und/oder auf Objektträgern, wobei die Behälter und/oder Objektträger auf einem, im wesentlichen horizontalen Arbeitsfeld mit einer Längsausdehnung X und einer Querausdehnung Y angeordnet sind und wobei die Vorrichtung Robotermanipulatoren zum Manipulieren der Proben umfasst. Dieses Manipulieren kann das Aufnehmen und/oder Abgeben von Fluiden, insbesondere von Flüssigkeiten, z.B. innerhalb dieses X-Y-Feldes betreffen. Ausserdem können Zentrifugen und andere Bearbeitungsstationen oder Analysestationen für Proben, wie Fluoreszenz-Reader und dergleichen vorgesehen sein. Wichtig ist für solche Arbeitsplattformen das Identifizieren von Objekten, wie Probenröhrchen, Mikroplatten und andere Proben enthaltende Behälter. Als Objekte werden hier auch sogenannte "Carrier" bezeichnet, welche üblicherweise zur Aufnahme von drei Mikroplatten ausgebildet sind.

Solche bekannten Arbeitsplattformen umfassen zumindest eine sich parallel zur X-Richtung erstreckende Schiene sowie eine mittels Antrieben an dieser Schiene in X-Richtung hin und her bewegliche Verschiebeeinheit mit einem Werkzeug zum Charakterisieren eines Objekts und einem motorisch angetriebenen Greifmechanismus zum Fassen und Annähern eines Objekts an das Charakterisier-Werkzeug. Ferner umfassen diese Vorrichtung einen Prozessor zum Steuern der Bewegungen der Verschiebeeinheit und der Aktionen des Greifmechanismus sowie zum Verarbeiten der von dem Charakterisier-Werkzeug gelieferten Informationen. Typischerweise ist das Werkzeug in den bekannten Arbeitsplattformen als Barcode-Reader ausgebildet und auf der Verschiebeeinheit angeordnet. Eine solche Anordnung des "Genesis Robotic Sample Processor" (Genesis RSP) ist beispielsweise aus dem Dokument "Genesis RSP and Genesis NPS Instruments Operating Manual - Doc ID 390783 V2.6", Seite 3-11 vom aktuellen Anmelder bekannt.

Proben, welche bearbeitet bzw. untersucht werden sollen befinden sich üblicherweise in Röhrchen oder in den Wells von Mikroplatten. Solche Röhrchen werden in geeignete Halter gestellt, so dass jeder Halter eine Reihe von Röhrchen aufnehmen kann, welche in Y-Richtung, also in Richtung der Querausdehnung der Arbeitsplattform in einer Linie nebeneinander angeordnet sind. Diese Halter sind auf der Arbeitsfläche geführt verschiebbar. Proben können sich auch in den Wells von Mikroplatten befinden, bzw. aus den Probenröhrchen in diese Wells umpipettiert worden sein. Dabei werden üblicherweise drei Mikroplatten auf einem sogenannten "Carrier" angeordnet, welcher ebenfalls auf der Arbeitsfläche geführt verschiebbar ist.

Zum Prüfen der Identität der Proben in einem Röhrchenhalter oder auf einem Carrier wird dieser Röhrchenhalter oder Carrier mit einem Greifer erfasst und in den Messbereich des Barcode-Readers gezogen. Nach der Identifikation werden die geprüften Objekte, d.h. der Röhrchenhalter mit den Probenröhrchen bzw. die Carrier mit den Mikroplatten, wieder an ihren ursprünglichen Ort auf der Arbeitsfläche zurückgeschoben.

Solche Arbeitsplattformen haben sich vielfach bewährt. Allerdings besteht oft die Notwendigkeit, einzelne Röhrchen, Röhrchenhalter, Mikroplatten oder Carrier an eine andere Position auf der Arbeitsfläche bzw. des Arbeitsfeldes der Arbeitsplattform zu transportieren. Üblicherweise geschieht dies von Hand, auf Förderbändern oder auch mit einem Robotermanipulator, der sich zum Beispiel auf den gleichen Schienen fortbewegen kann, wie ein Liquid-Handling-Arm, welcher zum Umpipettieren von Flüssigkeiten verwendet wird.

Aus US 6,060,022 ist ebenfalls eine solche Arbeitsplattform bekannt und wird als automatisiertes System zum Bearbeiten von Proben beschrieben. Ein solches System kann je nach der Komplexität des Systems und der damit auszuführenden Prozessschritte über mehrere Robotermanipulatoren verfügen.

Es hat sich gezeigt, dass solche Robotermanipulatoren derart häufig eingesetzt werden müssen, dass zum Transportieren von Objekten auf der Arbeitsfläche der Arbeitsplattform oft auf deren Verfügbarkeit gewartet werden muss. Zudem stellt auch die notwendige Identifikation der Proben eine aufwändige Arbeit dar, welche den Betrieb einer solchen Arbeitsplattform verlangsamen kann.

Aus dem Dokument WO 01/57538 A1 ist eine Vorrichtung zum Hin- und HerBewegen von Mikrotiterplatten zwischen verschiedenen Verarbeitungs- oder Lagerstationen ohne Barcode-Reader bekannt. Dabei werden Mikrotiterplatten mittels eines Shuttle-Tisches, auf dem sie positioniert werden, linear in horizontaler Richtung bewegt. Ein Transfer-Arm ist zum Auflegen einer Mikroplatte auf den Shuttle-Tisch und zum Abheben von diesem vorgesehen, wozu er durch eine Aussparung des Tisches hindurch von unten nach oben bewegbar ist.

Aus dem Dokument WO 92/22880 ist eine Arbeitsstation zum automatisierten Bearbeiten biologischer Proben bekannt. Diese Arbeitsstation umfasst einen Pipettier-Roboter, einen Lese-Roboter, verschiedene Lade- und Prozessier-Stationen sowie einen stationären Barcode-Reader. Der Pipettier-Roboter und der Lese-Roboter sind als 3-Achsen Roboter ausgebildet und umfassen jeweils einen Greifmechanismus zum Greifen von Kassetten, die Probenwells mit den biologischen Proben enthalten können. So werden die Proben mittel der 3-Achsen-Roboter zu den verschiedenen Stationen und zum Barcode-Reader transportiert.

Auch aus dem Dokument EP 1 248 170 A1 ist ein System zum Automatisieren von Laborprozessen bekannt. Gemäss diesem Dokument nimmt ein Roboter automatisiert Probenröhrchen aus Racks auf und setzt sie auf eine Art Transportband, dem Transport-Modul. Die Probenröhrchen werden durch das Transport-modul an einem stationären Barcode-Reader vorbeigeführt, so dass dieser die Röhrchen abtasten kann.

Aus dem Dokument US 5,388,946 ist ein robotisches System zum automatisierten Archivieren und Abfragen von Computer-Datenkassetten ohne die Verwendung eines Barcode-Readers bekannt. Das System umfasst einen robotischen Manipulator, der zwischen Computern und Kassetten-Lagern auf Schienen entlang sowie auf- und abbewegbar ist. Mit einem Greifer kann dann eine Datenkassette gefasst und auf den Schienen zum gewünschten Ort transportiert werden.

Aus dem Dokument EP 0 317 325 A2 schliesslich ist ein System zum Verfolgen forensischer Proben mit einer Druckerstation bekannt. Das System umfasst eine Lese-Schreib-Station, an der Identifizierungs-Codes gelesen und geschrieben werden. Dazu weist die Lese-Schreib-Station einen Druckkopf sowie einen reflektierenden Lese-Sensor auf, wobei der Lese-Sensor um seine Längsachse kippbar ist, so dass sowohl die obere als auch die untere Zeile eines Barcodes gelesen werden kann.

Die Aufgabe der vorliegenden Erfindung besteht gemäss einem ersten Aspekt darin, alternative Vorrichtungen und Verfahren vorzuschlagen, mit denen das Transportieren von Proben in einer Arbeitsplattform rationalisiert werden kann.

Gemäss einem zweiten Aspekt betrifft diese Erfindung das zusätzliche Identifizieren bzw. Charakterisieren von Proben in einer Arbeitsplattform.

Erfindungsgemäss wird die Aufgabe in Bezug auf den ersten Aspekt durch die Merkmalskombinationen der unabhängigen Ansprüche 1 bzw. 12 erfüllt. Zusätzliche erfindungsgemässe Merkmale, Varianten und Verbesserungen ergeben sich aus den abhängigen Ansprüchen.

An Hand von schematischen Zeichnungen sollen nun bevorzugte Ausführungsformen der vorliegenden Erfindung näher erläutert werden, ohne dass der Umfang der Erfindung dabei eingeschränkt werden soll. Dabei zeigen:
- Fig. 1: ein dreidimensionales Schema einer bekannten Arbeitsplattform aus dem Stand der Technik;
- Fig. 2: eine schematische Draufsicht auf eine erste Ausführungsform einer erfindungsgemässen Vorrichtung;
- Fig. 3: eine schematische Draufsicht auf eine zweite Ausführungsform einer erfindungsgemässen Vorrichtung;
- Fig. 4: eine schematische Draufsicht auf eine dritte Ausführungsform einer erfindungsgemässen Vorrichtung.

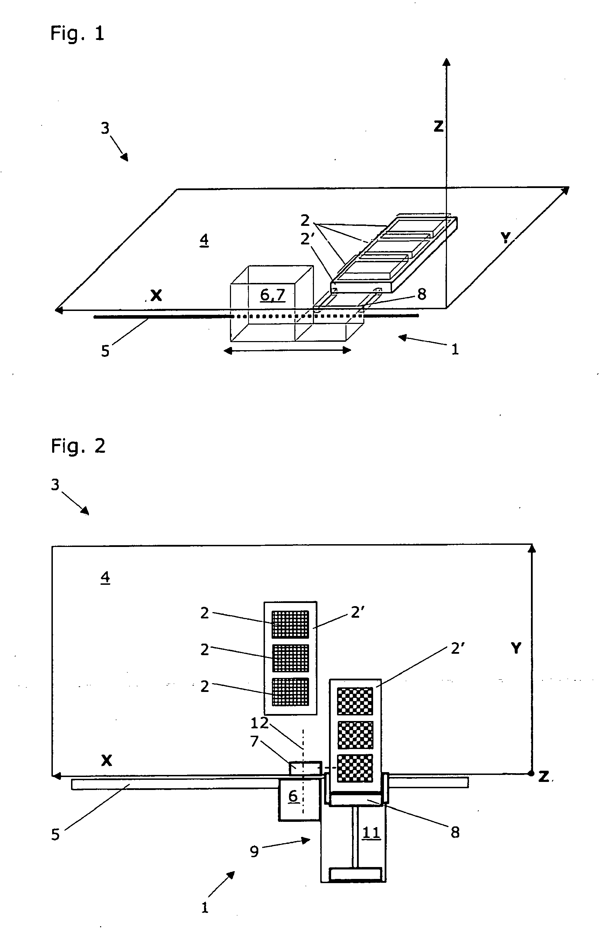

Figur 1 zeigt eine Vorrichtung 1 zum Charakterisieren von Objekten 2 in einem Probenmanipuliersystem 3, bei welchem die Objekte 2 auf zumindest einem, im wesentlichen horizontalen Arbeitsfeld 4 mit einer Längsausdehnung X und einer Querausdehnung Y angeordnet sind. Diese Vorrichtung 1 umfasst zumindest eine sich parallel zur X-Richtung erstreckende Schiene 5 sowie eine mittels Antrieben an dieser Schiene 5 in X-Richtung hin und her bewegliche Verschiebeeinheit 6. Die Verschiebeeinheit umfasst ein Werkzeug 7 zum Charakterisieren eines Objekts 2 und einen motorisch angetriebenen Greifmechanismus 8 zum Fassen und Annähern eines Objekts 2 an das Charakterisier-Werkzeug 7. Zudem umfasst die Vorrichtung 1 einen Prozessor (nicht gezeigt) zum Steuern der Bewegungen der Verschiebeeinheit 6 und der Aktionen des Greifmechanismus 8 sowie zum Verarbeiten der von dem Charakterisier-Werkzeug 7 gelieferten Informationen.

Figur 2 zeigt eine schematische Draufsicht auf eine bevorzugte, erste Ausführungsform einer erfindungsgemässen Vorrichtung 1. Diese Vorrichtung umfasst zusätzlich zu den Elementen der in Figur 1 gezeigten Arbeitsplattform eine Verschiebeeinheit 6 mit einer mit dieser Verschiebeinheit zusammen entlang der Schiene 5 beweglichen Tragvorrichtung 9 zum Transportieren von Objekten 2 in X-Richtung. Die Tragvorrichtung 9 ist hier als Tragplatte 11 ausgebildet, welche zusammen mit der Verschiebeeinheit 6, dem Werkzeug 7 zum Charakterisieren eines Objekts 2 und einem motorisch angetriebenen Greifmechanismus 8 zum Fassen und Annähern eines Objekts 2 an das Charakterisier-Werkzeug 7 entlang der Schiene 5 beweglich ist. Mittels des Greifmechanismus 8 werden Objekte 2, seien dies nun Carrier (wie in Fig. 2 dargestellt), Mikroplatten, Röhrchenhalter, Tröge oder andere Behälter für Proben oder Flüssigkeiten, auf die Tragplatte 11 gezogen und auf dieser Tragvorrichtung 9 in X-Richtung transportiert.

Es ist klar ersichtlich, dass der hier als Charakterisier-Werkzeug 7 eingesetzte Barcode-Reader eine Seite der ersten Mikroplatte 2 und/oder eine Seite des Carriers 2' abtastet und so die Identität der Proben in der entsprechenden Wells feststellt. Diese Identifikation erfolgt während dem der Carrier 2' auf die Tragplatte 11 der Tragvorrichtung 9 gezogen wird. Entsprechend der aktuellen X-Position dieser Tragplatte 11 ist das aufgenommene Objekt seiner ursprünglichen Position auf der Arbeitsfläche 4 zuordenbar. Dieses Erfassen der X-Position der Tragpatte 11, des Verfahrweges des Greifmechanismus 8 zum Fassen des Objekts (ursprüngliche Y-Position des Objekts) erfolgt über geeignete Sensoren zum Erfassen von Linearbewegungen, wie diese dem Fachmann aus dem Stand der Technik bekannt sind. Die Verarbeitung der Informationen dieser Sensoren (nicht gezeigt in Fig. 2), das Steuern der Antriebe für die Bewegung der Tragplatte 11 in X-Richtung und des Greifmechanismus 8 in Y-Richtung, sowie die Zuordnung dieser Informationen zu einer X/Y-Ursprungsposition des Objekts erfolgt vorzugsweise in einem digitalen Rechner (nicht dargestellt) der Teil des Probenmanipuliersystems 3 ist oder diesem beigestellt sein kann.

Hersteller und Anwender solcher Arbeitsplattformen haben sich inzwischen an eine hierarchische Gliederung der Objekte gewöhnt, an deren einem Ende die Carrier und an deren anderem Ende die immer einen einzelnen Behälter darstellenden Container stehen. Mehrere Container bilden idealerweise ein zweidimensionales Feld, Array oder Rack beispielsweise in Form einer Mikroplatte. Mehrere (z.B. drei) solcher Racks finden ihre definierte Position auf einem Carrier. Insbesondere, wenn alle Objekte variabel sind, ist das Identifizieren von allen Objekten der ganzen Hierarchie erwünscht und von Vorteil. Es kann auch wichtig sein, einzelne Wells einer Mikroplatte über Softwareanwendungen zu verfolgen. Wegen der definierten Position aller Wells innerhalb eines solchen Objekts genügt es allerdings, die Mikroplatte selbst einwandfrei zu identifizieren. Werden Probenröhrchen als Container oder Behälter verwendet, so sind einzelne dieser Röhrchen praktisch jederzeit auswechselbar (von Hand oder mit Hilfe eines Robotarms) und sollten sicherheitshalber auch individuell identifiziert werden.

Auch im Rahmen der vorliegenden Erfindung spielt die eben beschriebene Hierarchie eine Rolle: Der in Fig. 2 als Charakterisier-Werkzeug 7 eingesetzte Barcode-Reader fährt in einer ersten Passage einfach entlang der Schiene 5 und liest die Identifikationsmarken oder Flags der Carrier, welche bevorzugt alle im wesentlichen senkrecht von hinten lesbar sind. An Hand dieser Daten wird z.B. erkannt, um welche Typen von Carriern es sich handelt und ob sie bei einem späteren Transport einfach auf der Plattformoberfläche ziehbar sind. Ebenso geht aus diesen Daten vorzugsweise hervor, ob und an welchen Stellen und Winkeln die entsprechenden Barcodes der auf den Carriern positionierten Objekte zu erwarten sind. Bei einem zweiten Durchgang wird, je nach Bedarf, der eigentliche Inhalt der Objekte identifiziert, wobei z.B. folgende Zuordnungen gemacht werden: Röhrchen **→** Patientendaten; Reagenzien → Kontrolle; Mikroplatten → Kontrolle und Zuweisung. Standardmässig wird somit bevorzugt zuerst jeweils eine doppelte Identifikation durchführt und erst später (wenn erforderlich) wird auf eine direkte Nachkontrolle umgeschaltet.

Der Greifmechanismus 8 ist hier als Teleskoparm ausgebildet; alternativ dazu kann er auch als Gelenkarm ausgebildet sein. Eine weitere (nicht dargestellte) alternative Ausführungsform des Greifmechanismus umfasst eine in Y-Richtung verlaufende Schiene mit einer Raupenkette, welche angehoben bzw. abgesenkt werden kann, um z.B. die Carrier zu erfassen bzw. zu deponieren. Mittels dieser Tragvorrichtung 9 kann ein Objekt 2, welches dem Charakterisier-Werkzeug 7 angenähert wurde, in X-Richtung transportiert werden und darauf mittels des Greifmechanismus 8 an einer Position auf dem Arbeitsfeld deponiert werden, die verschieden ist von der ursprünglichen Position des Objekts auf der Arbeitsfläche.

Dabei wird beim Ausfahren des Greifmechanismus 8 vorzugsweise die Identität der Proben bzw. der Objekte nochmals erfasst und die neue X/Y-Position dieses Objekts 2,2' im zentralen Rechner gespeichert.

Aus der bisherigen Beschreibung ergibt sich, dass Objekte 2 unter Verwendung des Greifmechanismus 8 nicht nur erfasst, in einer Ebene transportiert und wieder deponiert werden können; vielmehr können auch Objekte 2 von einer Ebene auf eine in Z-Richtung darüber oder darunter angeordnete Ebene transportiert und dort deponiert werden. Beim Ausführen dieser Transportaufgaben ist es vorteilhaft, aber nicht unbedingt erforderlich, dass die Objekte jeweils mit dem Charakterisier-Werkzeug 7 identifiziert oder sonstwie charakterisiert werden.

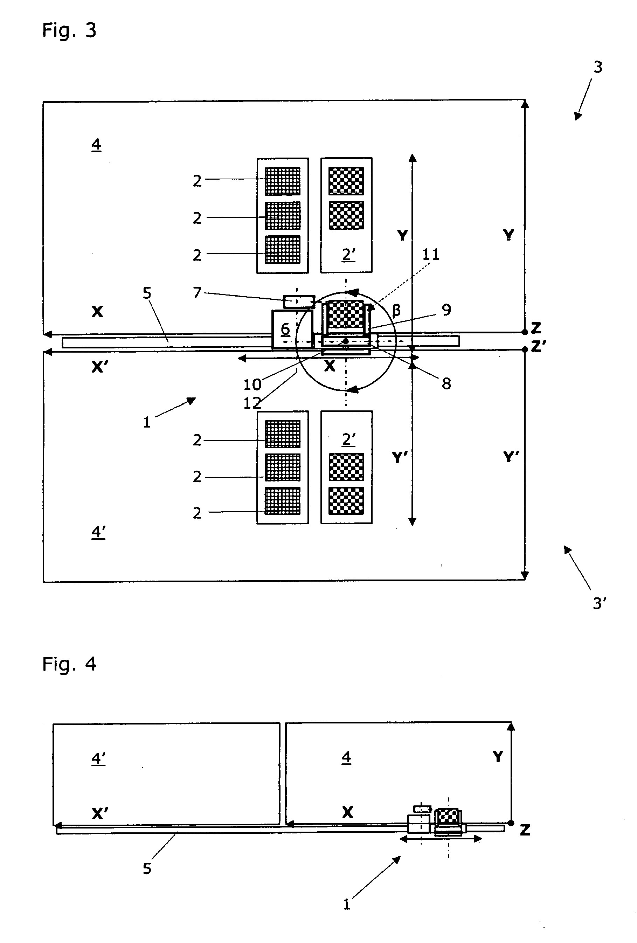

Figur 3 zeigt eine schematische Draufsicht auf eine zweite Ausführungsform einer erfindungsgemässen Vorrichtung 1 zum Charakterisieren von Objekten 2 in einem Probenmanipuliersystem 3, bei welchem die Objekte 2 auf zumindest einem, im wesentlichen horizontalen Arbeitsfeld 4 mit einer Längsausdehnung X und einer Querausdehnung Y angeordnet sind. Diese Vorrichtung 1 umfasst zumindest eine sich parallel zur X-Richtung erstreckende Schiene 5 sowie eine mittels Antrieben an dieser Schiene 5 in X-Richtung hin und her bewegliche Verschiebeeinheit 6, vorzugsweise mit einem Werkzeug 7 zum Charakterisieren eines Objekts 2 und einem motorisch angetriebenen Greifmechanismus 8 zum Fassen und Annähern eines Objekts 2 an das Charakterisier-Werkzeug 7. Die Vorrichtung 1 umfasst zudem einen Prozessor zum Steuern der Bewegungen der Verschiebeeinheit 6 und der Aktionen des Greifmechanismus 8 sowie zum Verarbeiten der von dem Charakterisier-Werkzeug 7 allenfalls gelieferten Informationen. Die erfindungsgemässe Vorrichtung 1 ist dadurch gekennzeichnet, dass die Verschiebeeinheit 6 eine mit ihr zusammen entlang der Schiene 5 bewegliche Tragvorrichtung 9 zum Transportieren von Objekten 2 in X-Richtung umfasst. Gemäss dieser zweiten, bevorzugten Ausführungsform umfasst die Tragvorrichtung 9 eine zum Tragen der Objekte 2,2' ausgebildete Tragplatte 11 und einen Greifmechanismus 8 zum Erfassen von Objekten 2 an einem Aufnahmeort, zum Befördern dieser Objekte 2 auf die Transportplatte 11 und zum Deponieren dieser Objekte 2 an einem Abgabeort. Dabei kann sich der Aufnahmeort in einem Arbeitsfeld 4 auf einer ersten Arbeitsplattform 14 und der Abgabeort in einem Arbeitsfeld 4' der ersten Arbeitsplattform 14 oder einer zweiten Arbeitsplattform 14' befinden.

Bevorzugt ist der Greifmechanismus 8 in Y-Richtung über zumindest die Ausdehnung eines auf dem Arbeitsfeld 4 positionierten Objekts 2,2' ausfahrbar und als Teleskoparm oder Gelenkarm ausgebildet. Zudem ist die Schiene 5 vorzugsweise ausserhalb des Arbeitsfeldes 4 angeordnet und weist eine Länge auf, welche zumindest der Längsausdehnung X des Arbeitsfeldes 4 entspricht. Die Schiene 5 kann aber auch länger als das Arbeitsfeld 4 des Probenmanipuliersystems 3 ausgebildet sein. Dadurch wird ermöglicht, dass Objekte von ausserhalb dieses Probenmanipuliersystems 3 abgeholt und auf dem Arbeitsfeld 4 positioniert werden können. Zudem wird auch die Ablage von Objekten, die von dem Arbeitsfeld 4 entfernt werden sollen, ausserhalb des Probenmanipuliersystems 3 ermöglicht. Besonders bevorzugt ist eine Vorrichtung 1, bei welcher die Tragvorrichtung 9 in Bezug auf eine senkrecht zum horizontalen Arbeitsfeld 4 stehenden Z-Achse 10 um einen Winkel β, der vorzugsweise + 180° und/oder - 180 ° beträgt, drehbar ist. In diesem Falle können zwei Probenmanipuliersysteme 3,3', welche parallel zu einander und auf der gleichen Arbeitshöhe angeordnet sind (vgl. Fig. 3), mit nur einer Vorrichtung bedient werden. Auch hier kann das Charakterisier-Werkzeug 7 einen Barcode-Reader und/oder ein IR-Thermometer und/oder ein Spektroskop und/oder eine Tube Inspection Unit und/oder eine Kamera umfassen.
Die Erfindung betrifft auch Probenmanipuliersysteme 3 mit zumindest einer der bisher beschriebenen Vorrichtungen 1. Solche Systeme können als eine einzige Arbeitsplattform 14 ausgebildet sein und ein einziges Arbeitsfeld 4 oder zwei (oder mehr) im wesentlichen horizontale Arbeitsfelder 4,4' mit je einer Längsausdehnung X,X' und je einer Querausdehnung Y,Y' umfassen. Dabei sind diese Arbeitsfelder 4,4' vorzugsweise in einer Ebene und parallel zueinander angeordnet. Dabei kommt eine besonders Platz sparende, spiegelsymmetrische Anordnung der Arbeitsfelder 4,4' wie in Fig. 3 und/oder auch eine gleichgerichtete Anordnung der Arbeitsfelder 4,4' wie in Fig. 4 in Frage.

Zudem können mehr als zwei Arbeitsplattformen zu einem übergeordneten System zusammengefasst werden. Insbesondere das lineare Anordnen einer grösseren Arbeitspattform zwischen zwei kleineren Arbeitsplattformen ermöglicht das Einrichten einer Beladestation (erste kleinere Arbeitsplattform) an der einen Schmalseite einer grossen Arbeitsplattform zum Bearbeiten bzw. Analysieren von Proben und das Einrichten einer Entladestation (zweite kleinere Arbeitsplattform) an der anderen Schmalseite der grossen Arbeitsplattform (nicht gezeigt). Mit dieser bevorzugten Anordnung kann ein System zum Bearbeiten von Proben mit hohem Durchsatz und einem kontinuierlichen Be- bzw. Entladen geschaffen werden. Falls erwünscht, kann zwischen den kleineren und der grossen Arbeitsplattform - entweder auf einer oder auf beiden Seiten - eine Schleuse vorgesehen sein, über welche Objekte 2 bevorzugt mittels der erfindungsgemässen Vorrichtung transportiert werden können.

Die Arbeitsfelder 4,4' können aber auch zueinander parallel oder um einen praktisch beliebigen Winkel β verdreht übereinander angeordnet sein (nicht gezeigt). Eine weitere (nicht gezeigte) Kombinationsmöglichkeit von zwei Arbeitsfeldern 4,4' besteht darin, dass diese in zwei parallel hintereinander angeordneten Arbeitsplattformen 14,14' platziert werden, so dass die Hinterseite der ersten Plattform der Vorderseite der zweiten Plattform gegenüber steht. Mit der erfindungsgemässen Vorrichtung 1, die in solchen Fällen vorzugsweise an der Hinterseite der zweiten Plattform angeordnet ist, kann dann "durch das hintere Arbeitsfeld 4' hindurch" auf das vordere Arbeitsfeld zugegriffen werden. Eine zusätzliche (nicht gezeigte) Kombinationsmöglichkeit von zwei Arbeitsfeldern 4,4' besteht darin, dass diese parallel hintereinander platziert werden, so dass die Hinterseite der ersten Plattform der Vorderseite der zweiten Plattform gegenüber steht. Mit der erfindungsgemässen Vorrichtung 1, die in solchen Fällen vorzugsweise an der Hinterseite der ersten Plattform angeordnet ist, kann ohne Drehen auf die vordere und/oder hintere Arbeitsplattform zugegriffen werden.

Die Verschiebeeinheit 6 mit dem optionalen Charakterisier-Werkzeug 7 und dem motorisch angetriebenen Greifmechanismus 8 ist dann an zumindest einer zwischen den beiden Arbeitsfeldern 4,4' angeordneten, sich parallel zur X-Richtung bzw. X'-Richtung erstreckenden Schiene 5 mittels Antrieben hin und her beweglich. Die Verschiebeeinheit 6 mit dem Charakterisier-Werkzeug 7 und dem motorisch angetriebenen Greifmechanismus 8 kann auch an zwei Schienen 5 (nicht gezeigt) hin und her beweglich angeordnet sein.

Die Erfindung umfasst auch entsprechende Verfahren zum Transportieren und vorzugsweise auch zum Charakterisieren von Objekten 2 in einem oder mehreren Probenmanipuliersystemen 3, wobei Objekte 2 an einer ersten X/Y-Position mit dem Greifmechanismus 8 erfasst, dem Charakterisier-Werkzeug 7 angenähert, von diesem Charakterisier-Werkzeug 7 charakterisiert bzw. identifiziert, in X-Richtung transportiert und an einer zweiten X/Y-Position wieder deponiert werden. Zu diesem Zweck werden die Objekte 2 gemäss einer ersten Ausführungsform auf eine Platte 11 einer Tragvorrichtung 9 gezogen und auf dieser Tragplatte 11 in X-Richtung transportiert. Gemäss einer zweiten Ausführungsform werden die Objekte 2 mit einem Greifmechanismus 8 angehoben und mit diesem Greifmechanismus 8 in X-Richtung transportiert. Wird das erfindungsgemässe Charakterisier- und Transport-Verfahren an einem System angewendet, welches zwei oder mehr Arbeitsfelder 4,4' umfasst, so können Objekte 2,2' an einer ersten X/Y-Position in einem ersten Arbeitsfeld 4 erfasst und an einer zweiten X/Y-Position in einem zweiten Arbeitsfeld 4', welches vorzugsweise parallel zum ersten Arbeitsfeld 4 und über, unter oder neben diesem angeordnet ist, deponiert werden. Auch können Objekte 2,2' ausserhalb des ersten oder zweiten Arbeitsfeldes 4,4' aufgenommen und/oder abgegeben werden.

Zum Ausführen des Verfahrens in einem Probenmanipuliersystem 3 mit gemäss Fig. 3 angeordneten Arbeitsfeldern 4,4' wird die Tragvorrichtung 9 - zwischen dem Erfassen und Deponieren eines Objekts 2,2' - in Bezug auf eine senkrecht zum horizontalen Arbeitsfeld 4 stehenden Z-Achse 10 um einen Winkel β, der vorzugsweise + 180 ° und/oder - 180 ° beträgt, gedreht. Dabei kann eine einzelne Mikroplatte (wie gezeigt) oder auch ein ganzer Carrier mit z.B. drei Mikroplatten oder Racks mit beispielsweise 16 Probenröhrchen (beides nicht gezeigt) von einem ersten Arbeitsfeld 4 zu einem zweiten Arbeitsfeld 4' transportiert werden.

Alternativ zu der Darstellung in den gezeigten Figuren kann das Werkzeug 7 zum Charakterisieren eines Objekts 2,2' ein IR-Thermometer und/oder ein Spektroskop und/oder eine Tube Inspection Unit und/oder eine Kamera umfassen, so dass mit diesen Werkzeugen die Identität und Qualität einer Probe, deren chemische Zusammensetzung bzw. deren physikalische Parameter erfasst werden können. Als Tube Inspection Unit wird hier eine Vorrichtung zum Durchführen einer automatischen Transmissionsmessung an Proben (z.B. Blutproben in Röhrchen) bezeichnet. Auf diese Weise kann mit der erfindungsgemässen Vorrichtung die Anwesenheit, die Position und die Qualität von Proben festgestellt werden. Übliche Barcode-Reader erfassen einen 1-D-Strichcode. Es können aber auch solche Reader eingesetzt werden, die einen 2-D-Code (z.B. in Form einer Pixelfläche) oder einen 3-D-Code (z.B. in Form eines Reliefs oder einer Holografie) lesen. Das Charakterisierwerkzeug 7 ist um eine oder mehrere Achsen dreh/kippbar, so dass die Probenbehälter bzw. Objekte 2,2' aus unterschiedlichen Raumwinkeln beobachtet oder erfasst werden können. Stellvertretend für die sich in praktisch beliebiger Raumlage befindenden Kipp- oder Drehachsen ist eine horizontale Kippachse 12 jeweils in den Figuren 2 bis 4 eingezeichnet.

Alle Figuren zeigen nur eine Vorrichtung 1, es kann aber - vor allem wenn mehrere Arbeitsfelder 4,4' versorgt werden müssen - vorteilhaft sein, dass das System zwei oder mehr Vorrichtungen 1 zum Transportieren und allfälligen Charakterisieren von Objekten 2 umfasst.

Die Bezugszeichen in den Figuren 1 bis 4 bezeichnen jeweils gleiche Merkmale, auch wenn nicht zu jeder Figur alle Merkmale ausdrücklich benannt werden. Teile der Vorrichtung 1 und des Probenmanipuliersystems 3, die jeder Fachmann nach Belieben auswählt, um diese zu vervollständigen, z.B. Pipettenspitzen, Tubings welche die Pipettenspitzen mit den Pumpen verbinden, Antriebe für die Robotermanipulatoren und dergleichen, sind in den Figuren weggelassen worden, damit diese übersichtlicher werden. Solche Teile sind selbstverständlich Teil der erfindungsgemässen Vorrichtungen 1 bzw. Systeme 3. Beliebige Kombinationen der offenbarten Merkmale der Erfindung gehören zu deren Umfang.

Eine nicht näher dargestellte Variante eines Probenmanipuliersystems 3 umfasst vorzugsweise zumindest ein Arbeitsfeld 4,4' oder eine Arbeitsplattform 14,14', die als für Personen unzugänglicher, geschützter Bereich 15 ausgestaltet ist. Ein solcher geschützter Bereich 15 kann ein an sich bekanntes Flow Cabinet oder eine Unterdruckkammer umfassen und allenfalls anwesende Personen vor einer Kontamination (Bio Hazard) durch zu verarbeitende Proben schützen. Vorzugsweise umfasst ein derartiger geschützter Bereich 15 eine Schleuse 16, über welche Objekte 2 oder Proben in z.B. das Flow Cabinet hinein oder aus diesem heraus transportiert werden können. Die erfindungsgemässe Vorrichtung 1 kann zu diesem Zweck als Teil dieser Schleuse 16 ausgebildet sein bzw. deren Transportfunktion ausführen.

Der geschützte Bereich 15 eines Arbeitsfeldes kann aber auch deshalb vom Rest einer Arbeitsplattform oder eines Systems abgetrennt sein, damit eine Person nicht besonders empfindliche Teile berühren oder gar beschädigen kann. Beispielsweise könnte sich ein unbeabsichtigtes Dejustieren eines Multipipettenkopfes (mit z.B. 1536 extrem genau eingestellten Pipettiernadeln) oder auch ein nur geringfügiges Verschieben eines hochpräzisen Carriers fatal auswirken, so dass die Pipettiernadeln durch Berühren der Mikroplattenoberfläche beschädigt werden könnten. Zudem wäre eine Kontamination oder Kreuzkontamination von benachbarten Proben z.B. in einer 1536-er Mikroplatte zu befürchten. Andere Dejustierungen könnten ein Blockieren von Verfahrensabläufen bewirken oder zum Verwechseln von Proben beitragen.

## Patentansprüche

1. Probenmanipuliersystem (3), welches umfasst:
a) ein im wesentlichen horizontales Arbeitsfeld (4) mit einer Längsausdehnung in X-Richtung und einer im wesentlichen rechtwinklig dazu verlaufenden Querausdehnung in Y-Richtung,
b) zumindest eine Vorrichtung (1) zum Transportieren von Objekten (2), welche entweder Behälter für Proben oder Flüssigkeiten oder Carrier für diese Behälter sind, und welche auf dem zumindest einen horizontalen Arbeitsfeld (4) angeordnet sind, wobei die Vorrichtung (1) zumindest eine sich parallel zur X-Richtung erstreckende Schiene (5) sowie eine mittels Antrieben an dieser Schiene (5) in X-Richtung hin und her bewegliche Verschiebeeinheit (6) mit einem motorisch in Y-Richtung angetriebenen Greifmechanismus (8) zum Fassen eines Objekts (2) und zum Annähern dieses Objekts (2) an ein Charakterisier-Werkzeug (7) umfasst,
c) ein als Barcode-Reader mit einem Messbereich ausgebildetes Charakterisier-Werkzeug (7), das auf der Verschiebeeinheit (6) angeordnet ist, wobei der Barcode-Reader befähigt ist, in einem ersten Durchgang einfach entlang der Schiene (5) zu fahren und die Identifikationsmarken oder Flags der Carrier zu lesen, und
d) einen Prozessor zum Steuern der Bewegungen der Verschiebeeinheit (6) und der Aktionen des Greifmechanismus (8) sowie zum Verarbeiten der vom Barcode-Reader gelieferten Informationen,
**dadurch gekennzeichnet, dass** die Verschiebeeinheit (6) eine mit ihr zusammen entlang der Schiene (5) bewegliche Tragvorrichtung (9) zum Transportieren von Objekten (2) in X-Richtung umfasst, wobei diese Tragvorrichtung (9) als Platte (11) zum Tragen von mit dem Greifmechanismus (8) auf diese Tragplatte (11) gezogenen Objekten (2) ausgebildet ist, und dass der Barcode-Reader zum Erfassen von Objekten (2) aus unterschiedlichen Raumwinkeln um eine oder mehrere Achsen dreh/kippbar ausgebildet ist, so dass er befähigt ist, in einem zweiten Durchgang, während ein Carrier mittels des Greifmechanismus (8) auf die Tragplatte (11) und in den Messbereich des Barcode-Readers gezogen wird, die Identität der Proben in dem Carrier zu prüfen.

2. Probenmanipuliersystem (3) nach Anspruch 1, **dadurch gekennzeichnet, dass** die Tragplatte (11) zusammen mit dem Greifmechanismus (8) in Bezug auf eine senkrecht zum horizontalen Arbeitsfeld (4) stehenden Z-Achse (10) um einen Winkel (β), der vorzugsweise + 180 ° und/oder - 180 ° beträgt, drehbar ist.

3. Probenmanipuliersystem (3) nach einem der vorhergehenden Ansprüche, **dadurch gekennzeichnet, dass** die Schiene (5) ausserhalb des Arbeitsfeldes (4) angeordnet ist und eine Länge aufweist, welche zumindest der Längsausdehnung in X-Richtung des Arbeitsfeldes (4) entspricht.

4. Probenmanipuliersystem (3) nach einem der vorhergehenden Ansprüche, **dadurch gekennzeichnet, dass** der Greifmechanismus (8) in Y-Richtung über zumindest die Ausdehnung eines auf dem Arbeitsfeld (4) positionierten Objekts (2,2') ausfahrbar und als Teleskoparm, Gelenkarm oder Raupenkette ausgebildet ist.

5. Probenmanipuliersystem (3) nach einem der vorhergehenden Ansprüche, **dadurch gekennzeichnet, dass** die Vorrichtung (1) zum Transportieren von Objekten (2) ein Werkzeug (7) zum Charakterisieren von Objekten (2) umfasst, wobei der motorisch angetriebene Greifmechanismus (8) zum Fassen und Annähern eines Objekts (2) an dieses Charakterisier-Werkzeug (7) ausgebildet ist und der Prozessor zum Steuern der Bewegungen der Verschiebeeinheit (6) und der Aktionen des Greifmechanismus (8) auch zum Verarbeiten der von diesem Charakterisier-Werkzeug (7) gelieferten Informationen ausgebildet ist.

6. Probenmanipuliersystem (3) nach Anspruch 5, **dadurch gekennzeichnet, dass** das Charakterisier-Werkzeug (7) ein IR-Thermometer und/oder ein Spektroskop und/oder eine Tube Inspection Unit und/oder eine Kamera umfasst.

7. Probenmanipuliersystem (3) nach einem der vorhergehenden Ansprüche, **dadurch gekennzeichnet, dass** der Barcode-Reader zum Lesen eines 1-D-, 2-D- oder 3-D-Codes ausgebildet ist.

8. Probenmanipuliersystem (3) nach einem der vorhergehenden Ansprüche, welche zwei oder mehr im wesentlichen horizontale Arbeitsfelder (4,4') umfasst, **dadurch gekennzeichnet, dass** die Verschiebeeinheit (6) mit der Tragplatte (11) und dem motorisch angetriebenen Greifmechanismus (8) an zumindest einer hinter diesen Arbeitsfeldern (4,4') angeordneten, sich parallel zur X-Richtung bzw. X'-Richtung erstreckenden Schiene (5) mittels Antrieben hin und her beweglich ist.

9. Probenmanipuliersystem (3) nach Anspruch 8, **dadurch gekennzeichnet, dass** diese Arbeitsfelder (4,4') gleich ausgerichtet nebeneinander und/oder spiegelsymmetrisch ausgerichtet hintereinander angeordnet sind.

10. Probenmanipuliersystem (3) nach Anspruch 8 oder 9, **dadurch gekennzeichnet, dass** diese Arbeitsfelder (4,4') parallel zueinander angeordnet sind.

11. Probenmanipuliersystem (3) nach einem der Ansprüche 8 bis 10, **dadurch gekennzeichnet, dass** diese Arbeitsfelder (4,4') alle in einer Ebene angeordnet sind.

12. Verfahren zum Identifizieren und Transportieren von Objekten (2) in einem Probenmanipuliersystem (3), welches umfasst:
a) Bereitstellen eines im wesentlichen horizontalen Arbeitsfelds (4) mit einer Längsausdehnung in X-Richtung und einer im wesentlichen rechtwinklig dazu verlaufenden Querausdehnung in Y-Richtung, wobei die Objekte (2) auf diesem Arbeitsfeld (4) angeordnet werden,
b) Bereitstellen einer Vorrichtung (1) zum Transportieren der Objekte (2), welche entweder Behälter für Proben oder Flüssigkeiten oder Carrier für diese Behälter sind, wobei diese Vorrichtung (1) zumindest eine sich parallel zur X-Richtung erstreckende Schiene (5) sowie eine mittels Antrieben an dieser Schiene (5) in X-Richtung hin und her bewegliche Verschiebeeinheit (6) und einem motorisch in Y-Richtung angetriebenen Greifmechanismus (8) zum Fassen eines Objekts (2) und zum Annähern dieses Objekts (2) an ein Charakterisier-Werkzeug (7) umfasst,
c) Bereitstellen eines als Barcode-Reader mit einem Messbereich ausgebildeten Charakterisier-Werkzeugs (7), das auf der Verschiebeeinheit (6) angeordnet ist, und
d) Bereitstellen eines Prozessors zum Steuern der Bewegungen der Verschiebeeinheit (6) und der Aktionen des Greifmechanismus (8) sowie zum Verarbeiten der vom Barcode-Reader gelieferten Informationen,
wobei der Barcode-Reader in einem ersten Durchgang einfach entlang der Schiene (5) fährt und die Identifikationsmarken oder Flags der Carrier liest, **dadurch gekennzeichnet, dass** Objekte (2) an einer ersten X/Y-Position mit dem Greifmechanismus (8) erfasst, auf eine Platte (11) einer Tragvorrichtung (9) gezogen, auf dieser Tragplatte (11) in X-Richtung transportiert und an einer zweiten X/Y-Position wieder deponiert werden,
und dass der Barcode-Reader so um eine oder mehrere Achsen gedreht/gekippt wird, dass er zum Erfassen von Objekten (2) aus verschiedenen Raumwinkeln in einem zweiten Durchgang, während ein Carrier mittels des Greifmechanismus (8) auf die Tragplatte (11) und in den Messbereich des Barcode-Readers gezogen wird, die Identität der Proben in dem Carrier prüft.

13. Verfahren nach Anspruch 12, **dadurch gekennzeichnet, dass** ein Objekt (2) an einer ersten X/Y-Position in einem ersten Arbeitsfeld (4) mit der Vorrichtung (1) erfasst und an einer zweiten X/Y-Position in einem zweiten Arbeitsfeld (4'), welches parallel zum ersten Arbeitsfeld (4) bzw. über, unter oder neben diesem angeordnet ist, deponiert wird.

14. Verfahren nach Anspruch 13, **dadurch gekennzeichnet, dass** das Objekt (2) ausserhalb des ersten oder zweiten Arbeitsfeldes (4,4') aufgenommen und/oder abgegeben wird.

15. Verfahren nach einem der Ansprüche 12 bis 14, **dadurch gekennzeichnet, dass** die Tragvorrichtung (9) - zwischen dem Erfassen und Deponieren eines Objekts (2) - in Bezug auf eine senkrecht zum horizontalen Arbeitsfeld (4) stehenden Z-Achse (10) um einen Winkel (β), der vorzugsweise + 180 ° und/oder - 180 ° beträgt, gedreht wird.

16. Verfahren nach einem der Ansprüche 12 bis 15, **dadurch gekennzeichnet, dass** die Objekte (2) mit der Vorrichtung (1) einem Werkzeug (7) zum Charakterisieren eines Objekts (2) angenähert und von diesem Charakterisier-Werkzeug (7) charakterisiert werden, wobei die von dem Charakterisier-Werkzeug (7) gelieferten Informationen von einem Prozessor der Vorrichtung (1) verarbeitet werden.

17. Verfahren nach Anspruch 16, **dadurch gekennzeichnet, dass** mit dem Charakterisier-Werkzeug (7) die chemische Zusammensetzung und/oder physikalische Eigenschaften von Proben festgestellt wird/werden.

## Claims

1. Sample manipulation system (3), which comprises:
a) an essentially horizontal working field (4) having a longitudinal extension in the X direction and a transverse extension in the Y direction extending essentially perpendicular thereto,
b) at least one device (1) for transporting objects (2), which are either containers for samples or liquids or carriers for these containers, and which are arranged on the at least one horizontal working field (4), wherein the device (1) comprises at least one rail (5) extending parallel to the X direction and also a displacement unit (6), which is movable back and forth in the X direction on this rail (5) by means of drives, having a gripping mechanism (8) driven by a motor in the Y direction for grasping an object (2) and for approaching this object (2) to a characterization tool (7),
c) a characterization tool (7), which is implemented as a barcode reader having a measuring range, and which is arranged on the displacement unit (6), wherein the barcode reader is capable of simply traveling along the rail (5) in a first passage and reading the identification marks or flags of the carrier, and
d) a processor for controlling the movements of the displacement unit (6) and the actions of the gripping mechanism (8) and for processing the items of information delivered by the barcode reader,
**characterized in that** the displacement unit (6) comprises a support device (9), which is movable together with it along the rail (5), for transporting objects (2) in the X direction, wherein this support device (9) is implemented as a plate (11) for supporting objects (2) drawn using the gripping mechanism (8) onto this support plate (11),
and **in that** the barcode reader is implemented as rotatable/tiltable around one or more axes for capturing objects (2) from different spatial angles, so that it is capable in a second passage, while a carrier is drawn by means of the gripping mechanism (8) onto the support plate (11) and into the measuring range of the barcode reader, of checking the identity of the samples in the carrier.

2. Sample manipulation system (3) according to Claim 1, **characterized in that** the support plate (11) is rotatable together with the gripping mechanism (8) in relation to a Z axis (10), which is perpendicular to the horizontal working field (4), by an angle (β), which is preferably +180° and/or -180°.

3. Sample manipulation system (3) according to one of the preceding claims, **characterized in that** the rail (5) is arranged outside the working field (4) and has a length which corresponds at least to the longitudinal extension in the X direction of the working field (4).

4. Sample manipulation system (3) according to one of the preceding claims, **characterized in that** the gripping mechanism (8) is extendable in the Y direction over at least the extension of an object (2,2') positioned on the working field (4) and is implemented as a telescopic arm, jointed arm, or caterpillar track.

5. Sample manipulation system (3) according to one of the preceding claims, **characterized in that** the device (1) for transporting objects (2) comprises a tool (7) for characterizing objects (2), wherein the motor-driven gripping mechanism (8) is implemented to grasp and approach an object (2) to this characterization tool (7) and the processor for controlling the movements of the displacement unit (6) and the actions of the gripping mechanism (8) is also implemented to process items of information delivered by this characterization tool (7).

6. Sample manipulation system (3) according to Claim 5, **characterized in that** the characterization tool (7) comprises an IR thermometer and/or a spectroscope and/or a tube inspection unit and/or a camera.

7. Sample manipulation system (3) according to one of the preceding claims, **characterized in that** the barcode reader is implemented to read a 1-D, 2-D, or 3-D code.

8. Sample manipulation system (3) according to one of the preceding claims, which comprises two or more substantially horizontal working fields (4,4'), **characterized in that** the displacement unit (6), with the support plate (11) and the motor-driven gripping mechanism (8), is movable by means of drives back and forth on at least one rail (5), which is arranged behind these working fields (4,4') and extends parallel to the X direction or X' direction.

9. Sample manipulation system (3) according to Claim 8, **characterized in that** these working fields (4,4') are arranged identically aligned adjacent to one another and/or mirror-symmetrically aligned one behind the other.

10. Sample manipulation system (3) according to Claim 8 or 9, **characterized in that** these working fields (4,4') are arranged parallel to one another.

11. The sample manipulation system (3) according to one of the Claims 8 to 10, **characterized in that** these working fields (4,4') are all arranged in one plane.

12. Method for identifying and transporting objects (2) in a sample manipulation system (3), which comprises:
a) providing a substantially horizontal working field (4) having a longitudinal extension in the X direction and a transverse extension in the Y direction extending substantially perpendicularly thereto, wherein the objects (2) are arranged on this working field (4),
b) providing a device (1) for transporting the objects (2), which are either containers for samples or liquids or carriers for these containers, wherein this device (1) comprises at least one rail (5) extending parallel to the X direction and also a displacement unit (6), which is movable back and forth in the X direction by means of drives on this rail (5), having a gripping mechanism (8) driven by a motor in the Y direction for grasping an object (2) and for approaching this object (2) to a characterization tool (7),
c) providing a characterization tool (7), which is implemented as a barcode reader having a measuring range, and which is arranged on the displacement unit (6), and
d) providing a processor for controlling the movements of the displacement unit (6) and the actions of the gripping mechanism (8) and also for processing the items of information delivered by the barcode reader,
wherein the barcode reader travels in a first passage simply along the rail (5) and reads the identification marks or flags of the carrier, **characterized in that** objects (2) are acquired at a first X/Y position using the gripping mechanism (8), drawn onto a plate (11) of a support device (9), transported on this support plate (11) in the X direction and deposited again at a second X/Y position,
and **in that** the barcode reader is rotated/tilted around one or more axes so that, to capture objects (2) from various spatial angles in a second passage, while a carrier is drawn by means of the gripping mechanism (8) onto the support plate (11) and into the measuring range of the barcode reader, it checks the identity of the samples in the carrier.

13. Method according to Claim 12, **characterized in that** an object (2) is acquired at a first X/Y position in a first working field (4) using the device (1) and is deposited at a second X/Y position in a second working field (4'), which is arranged parallel to the first working field (4), or above, below, or adjacent thereto, respectively.

14. Method according to Claim 13, **characterized in that** the object (2) is acquired and/or deposited outside the first or second working field (4,4').

15. Method according to one of the Claims 12 to 14, **characterized in that** the support device (9) is rotated - between the acquiring and depositing of an object (2) - in relation to a Z axis (10), which is perpendicular to the horizontal working field (4), by an angle (β), which is preferably +180° and/or -180°.

16. Method according to one of the Claims 12 to 15, **characterized in that** the objects (2) are approached using the device (1) to a tool (7) for characterizing an object (2) and are **characterized by** this characterization tool (7), wherein the items of information delivered by the characterization tool (7) are processed by a processor of the device (1).

17. Method according to Claim 16, **characterized in that** the chemical composition and/or physical properties of samples is/are established using the characterization tool (7).

## Revendications

1. Système de manipulation d'échantillons (3) comprenant :
a) une zone de travail (4) essentiellement horizontale avec une étendue longitudinale dans la direction X et une étendue transversale dans la direction Y s'étendant essentiellement perpendiculairement à cette dernière,
b) au moins un dispositif (1) pour transporter des objets (2) qui sont soit des récipients pour échantillons ou liquides soit des chariots pour ces récipients, et qui sont agencés sur la au moins une zone de travail (4) horizontale, le dispositif (1) comprenant au moins un rail (5) s'étendant parallèlement à la direction X et une unité mobile (6) pouvant aller et venir dans la direction X sur ce rail (5) à l'aide de commandes et comprenant un mécanisme de préhension (8) entraîné par moteur dans la direction Y pour pouvoir saisir un objet (2) et l'approcher d'un outil de caractérisation (7),
c) un outil de caractérisation (7) réalisé sous la forme d'un lecteur de code à barres avec une zone de mesure, lequel outil est agencé sur l'unité mobile (6), le lecteur de code à barres étant capable, dans un premier passage, de se déplacer simplement le long du rail (5) et de lire les marques d'identification ou les indicateurs des chariots, et
d) un processeur pour commander les mouvements de l'unité mobile (6) et les actions du mécanisme de préhension (8) ainsi que pour traiter les informations fournies par le lecteur de code à barres,
**caractérisé en ce que** l'unité mobile (6) comprend un support (9) mobile avec elle le long du rail (5) pour transporter des objets (2) dans la direction X, ce support (9) étant réalisé sous la forme d'une plaque (11) pour porter les objets (2) montés sur cette plaque de support (11) avec le mécanisme de préhension (8),
et **en ce que** le lecteur de code à barres est conçu mobile autour d'un ou plusieurs axes pour enregistrer des objets (2) d'angles solides différents, de façon à être capable, dans un deuxième passage, pendant qu'un chariot est monté avec le mécanisme de préhension (8) sur la plaque de support (11) et amené dans la zone de mesure du lecteur de code à barres, de vérifier l'identité des échantillons dans le chariot.

2. Système de manipulations d'échantillons (3) selon la revendication 1, **caractérisé en ce que** la plaque de support (11), avec le mécanisme de préhension (8), peut pivoter par rapport à un axe Z (10) situé perpendiculairement à la zone de travail (4) horizontale suivant un angle (β) qui est de préférence de +180° et/ou -180°.

3. Système de manipulation d'échantillons (3) selon l'une des revendications précédentes, **caractérisé en ce que** le rail (5) est agencé à l'extérieur de la zone de travail (4) et présente une longueur qui correspond au moins à l'étendue longitudinale dans la direction X de la zone de travail (4).

4. Système de manipulation d'échantillons (3) selon l'une des revendications précédentes, **caractérisé en ce que** le mécanisme de préhension (8) peut être déployé dans la direction Y sur au moins l'étendue d'un objet (2,2') positionné sur la zone de travail (4) et peut être réalisé sous la forme d'un bras télescopique, d'un bras articulé ou d'une chenille.

5. Système de manipulation d'échantillons (3) selon l'une des revendications précédentes, **caractérisé en ce que** le dispositif (1) pour transporter les objets (2) comprend un outil (7) pour caractériser les objets (2), le mécanisme de préhension (8) à entraînement motorisé étant conçu pour saisir et approcher un objet (2) de l'outil de caractérisation (7) et **en ce que** le processeur pour commander les mouvements de l'unité mobile (6) et les actions du mécanisme de préhension (8) est conçu également pour traiter les informations fournies par cet outil de caractérisation (7).

6. Système de manipulation d'échantillons (3) selon la revendication 5, **caractérisé en ce que** l'outil de caractérisation (7) comprend un thermomètre infrarouge et/ou un spectroscope et/ou une unité d'inspection de tubes et/ou une caméra.

7. Système de manipulation d'échantillons (3) selon l'une des revendications précédentes, **caractérisé en ce que** le lecteur de code à barres est conçu pour lire un code 1D, 2D ou 3D.

8. Système de manipulation d'échantillons (3) selon l'une des revendications précédentes, comprenant deux zones de travail (4,4') ou plus essentiellement horizontales, **caractérisé en ce que** l'unité mobile (6), avec la plaque de support (11) et le mécanisme de préhension (8) à commande motorisée, est mobile, au moyen de commandes, dans un mouvement de va-et-vient sur au moins un rail (5) agencé derrière ces zones de travail (4,4') et s'étendant parallèlement à la direction X ou à la direction X'.

9. Système de manipulation d'échantillons (3) selon la revendication 8, **caractérisé en ce que** ces zones de travail (4,4') sont soit agencées alignées l'une à côté de l'autre et/ou l'une derrière l'autre en symétrie.

10. Système de manipulation d'échantillons (3) selon la revendication 8 ou 9, **caractérisé en ce que** ces zones de travail (4,4') sont agencées parallèlement l'une à l'autre.

11. Système de manipulation d'échantillons (3) selon l'une des revendications 8 à 10, **caractérisé en ce que** ces zones de travail (4, 4') sont toutes agencées dans un même plan.

12. Procédé pour identifier et transporter des objets (2) dans un système de manipulation d'échantillons (3), lequel comprenne :
a) préparer une zone de travail (4) essentiellement horizontale avec une étendue longitudinale dans la direction X et une étendue transversale dans la direction Y essentiellement perpendiculaire à cette dernière, les objets (2) étant agencés sur cette zone de travail (4),
b) préparer un dispositif (1) pour transporter les objets (2) qui sont soit des récipients pour échantillons ou liquides ou des chariots pour ces récipients, ce dispositif (1) comprenant au moins un rail (5) s'étendant parallèlement à la direction X ainsi qu'une unité mobile (6) mobile dans un mouvement de va-et-vient dans la direction X sur ce rail (5) par le biais de commandes, ainsi qu'un mécanisme de préhension (8) entraîné par moteur dans la direction Y pour saisir un objet (2) et rapprocher cet objet (2) d'un outil de caractérisation (7),
c) préparer un outil de caractérisation (7) réalisé sous la forme d'un lecteur de code à barres avec une zone de mesure, lequel est agencé sur l'unité mobile (6), et
d) préparer un processeur pour commander les mouvements de l'unité mobile (6) et les actions du mécanisme de préhension (8), ainsi que pour traiter les informations fournies par le lecteur de code à barres,
le lecteur de codes à barres passant simplement, dans un premier passage, le long du rail (5) et lisant les marques d'identification ou indicateurs du chariot,
**caractérisé en ce que** les objets (2) sont saisis à une première position X/Y par le mécanisme de préhension (8), sont amenés sur une plaque (11) d'un support (9), transportés sur cette plaque de support (11) dans la direction X et redéposés à une deuxième position X/Y,
et **en ce que** le lecteur de code à barres pivote autour d'un ou plusieurs axes de sorte que, pour enregistrer les objets (2) d'angles solides différents lors d'un deuxième passage, pendant qu'un chariot est monté avec le mécanisme de préhension (8) sur la plaque de support (11) et amené dans la zone de mesure du lecteur de code à barres, il puisse vérifier l'identité des échantillons dans le chariot.

13. Procédé selon la revendication 12, **caractérisé en ce qu'**un objet (2) est saisi à une première position X/Y dans une première zone de travail (4) avec le dispositif (1) et est déposé à une deuxième position X/Y dans une deuxième zone de travail (4'), laquelle est agencée parallèlement à la première zone de travail (4) ou au-dessus, en-dessous ou à côté de cette dernière.

14. Procédé selon la revendication 13, **caractérisé en ce que** l'objet (2) est pris et/ou déposé en dehors de la première ou de la deuxième zone de travail (4,4').

15. Procédé selon l'une des revendications 12 à 14, **caractérisé en ce que** le dispositif de support (9) - entre la saisie et la décharge d'un objet (2) - est pivoté par rapport à un axe Z (10) agencé perpendiculairement par rapport à la zone de travail (4) horizontale, d'un angle (β) qui est de préférence de +180° et/ou -180°.

16. Procédé selon l'une des revendications 12 à 15, **caractérisé en ce que** les objets (2) sont approchés à l'aide du dispositif (1) d'un outil (7) destiné à caractériser l'objet (2) et sont **caractérisés par** cet outil de caractérisation (7), les informations fournies par l'outil de caractérisation (7) étant traitées par un processeur du dispositif (1).

17. Procédé selon la revendication 16, **caractérisé en ce que** l'outil de caractérisation (7) permet de déterminer la composition chimique et/ou les propriétés physiques des échantillons.
